# EUROPÄISCHE PATENTANMELDUNG

(11) **EP 1 273 849 A2**
(43) Veröffentlichungstag der Anmeldung: **08.01.2003**
(21) Anmeldenummer: 02014660.1
(22) Anmeldetag: 02.07.2002
(51) Int. Cl.: F21V 17/02

(54) **Optik für Raumleuchten**

(30) Priorität: 06.07.2001 DE 10132974
(71) Anmelder: TRILUX-LENZE GmbH & Co. KG, D-59759 Arnsberg (DE)
(72) Erfinder: Lehrich, Karl, 59757 Arnsberg (DE)
(74) Vertreter: Gudat, Axel

(57) **Zusammenfassung**

Die Erfindung betrifft eine Optik für eine Leuchte, insbesondere für eine Reinstraumleuchte zur Verwendung im klinischen Bereich, die eine langgestreckte Leuchtstofflampe (2) und einen diese zumindest einseitig umschließenden Reflektor (3) aufweist, mit dem eine gerichtete Lichtdichte erzeugbar ist. Um derartige Leuchten für verschiedene Beleuchtungssituationen einfach umzurüsten, wird erfindungsgemäß vorgeschlagen, dass die gesamte Optik drehbar um eine Rotationsachse in dem Leuchtengehäuse (1) aufgenommen ist.

## Beschreibung

Die Erfindung betrifft eine Optik für Raumleuchten, insbesondere für eine Reinstraumleuchte vorzugsweise zur Verwendung im medizinischen Bereich, die einen in einem Leuchtengehäuse angeordneten Reflektor zur Bildung und Lenkung der Beleuchtungsstrahlung einer langgestreckten Leuchtstofflampe in eine gewünschte Richtung aufweist.

Derartige Optiken werden vorzugsweise in Reinstraumleuchten in klinischen Bereichen eingesetzt. Üblicherweise steht der Raum oberhalb des Operationstisches nicht für die Installation von vorzugsweise in die Decken eingelassene Leuchten zur Verfügung, da dieser Bereich für die medizinischen Installationen erforderlich ist, die oberhalb des OP-Tisches angeordnet sein müssen. Es sind in diesem Bereich beispielsweise Lufteinlassund -auslasskanäle vorgesehen, welche eine Installation von Leuchten unmöglich machen. Derartige Reinstraumleuchten müssen deshalb seitlich versetzt von dem OP-Tisch anzuordnen. Um eine Lenkung der Leuchtdichte in Richtung des Tisches zu bewirken, sind diese Leuchten mit Optiken ausgebildet. Eine derartige Optik besteht im Wesentlichen aus einem langgestreckten konkaven Hohlspiegel, welcher die Leuchtstofflampe einseitig umschließt und die Leuchtstrahlen in die entgegengesetzte Richtung lenkt.

Die Ausrichtung der Reflektoren erfolgt üblicherweise bereits werkseitig, da diese abhängig ist von der Einbaurichtung der Leuchte. Soll ein Umbau erfolgen, muss die gesamte Leuchte samt Optik ausgebaut werden. Daneben muss der Produzent verschiedene Varianten auf Lager halten, was mit hohen Lagerhaltungskosten verbunden ist.

Es ist Aufgabe der vorliegenden Erfindung, eine gattungsgemäße Leuchte derart weiterzuentwickeln, dass diese einfacher an die verschiedenen erforderlichen Einbausituationen anpassbar ist.

Erfindungsgemäß wird dieses dadurch gelöst, dass zumindest der langgestreckte Reflektor drehbar in dem Leuchtengehäuse aufgenommen ist.

Die erfindungsgemäße Ausgestaltung ermöglicht eine Ausrichtung des Reflektors in der gewünschten Strahlrichtung im eingebauten Zustand, z.B. durch Abnehmen der Glasabdeckung einer in die Decke eingelassenen Leuchte und durch Drehen des Reflektors. Damit ist eine standardisierte Fertigung der Leuchten möglich, die erst beim Einbau auf die verschiedenen Leuchtensituationen eingestellt werden müssen. Mit dem drehbaren Reflektor sind alle gängigen Strahlungsrichtungen beliebig einstellbar, so z.B. symmetrisch tiefstrahlend, symmetrisch breitstrahlend oder asymmetrisch tief- und/oder breitstrahlend. Die Leuchte ist damit bedarfsgerecht ausrichtbar und jederzeit umrüstbar. Die Optik ist für Ein-, Anbau- und Pendelleuchten verwendbar.

Besonders einfach fertigbar ist die Optik, wenn das Reflektorblech in Kopfstücken gelagert ist, die das Reflektorblech endseitig aufnehmen und ihrerseits in dem Leuchtengehäuse drehbar gelagert sind. Durch eine derartige Ausbildung ist der Reflektor einfach in die Kopfstücke einsetzbar und eventuell einrastbar und kann mit den Kopfstücken in das Leuchtengehäuse eingehängt werden. Üblicherweise ist das Kopfstück mit einer im Wesentlichen U-förmig ausgebildeten Rille versehen, in die das stirnseitige Ende des Reflektors einschiebbar ist.

In einer Weiterentwicklung kann die Optik zudem die langgestreckte Leuchtstofflampe - häufig auch als Leuchtstoffröhre bezeichnet - umfassen, die mit dem Reflektor drehbar ist. Bei einem parabolisch ausgebildeten Reflektor ist damit immer die optimale Bündelung der Beleuchtung gewährleistet.

Die Optik kann entweder stufenlos einstellbar sein oder es können Raststufen vorgesehen sein, mit denen diese in den üblichen Strahlungswinkeln einrastbar ist. Diese Strahlungswinkel betragen vorzugsweise 0°, 15° und 30° im Verhältnis zur Horizontalebene.

Die drehbare Lagerung wird im einfachsten Fall durch außenseitig an dem Kopfstück oder dem Reflektorblech an den Stirnseiten vorgesehene Stifte bewerkstelligt, die in das Leuchtengehäuse drehbar einsetzbar sind und als Drehgelenk dienen. Üblicherweise ist radial beabstandet von dem Drehgelenk ein ebenfalls vorzugsweise stiftförmiges Führungselement angeformt, das in eine an dem Leuchtengehäuse vorgesehene Führungsöffnung eingreift und in dieser verschiebbar ist. Durch entsprechende Dimensionierung der Länge der Führungsöffnung ist der Drehbereich der Optik begrenzbar. In einer Weiterentwicklung kann ein Einsatzblech vorgesehen sein, durch welches der Schwenkbereich variabel begrenzbar ist in Abhängigkeit von der Ausnehmung in dem vorgesehenen Einsatzblech.

Zur Erhöhung der Leuchtdichte und zur Vermeidung direkter Lichtstrahlung kann in Strahlungsrichtung der Leuchtstofflampe eine sich entlang deren gesamter Länge erstreckende Reflektorleiste vorgesehen sein. Diese Reflektorleiste lenkt das direkt von der Leuchtstofflampe ausgehende Licht zunächst gegen den Reflektor, der die Strahlung gemäß der Gestaltung des Reflektors aussendet. Vorzugsweise weist die Reflektorleiste einen einsprengbaren Spiegel aus hochglänzend poliertem Aluminium auf.

In einer Weiterentwicklung kann vorgesehen sein, dass die Optik um ihre Drehachse motorisch einstellbar ist, um den Strahlungswinkel ohne Öffnen der Leuchten einstellen zu können. Der Motor kann auch über eine Fernbedienung ansteuerbar sein.

Bestehende Leuchten können mit der erfindungsgemäßen Optik einfach nachgerüstet werden, wenn an den stirnseitigen Enden des Leuchtengehäuses Haltebleche eingesetzt werden, in welche die Drehgelenke der Optik lagerbar sind. Derartige Haltebleche sind vorzugsweise als L-Profile ausgebildet, deren Längsschenkel in Einbaulage waagerecht nach unten ragen und deren Querschenkel an der Oberseite des Leuchtengehäuses verschraubbar sind.

Die Erfindung ist in den Figuren anhand bevorzugter Ausführungsbeispiele dargestellt und im Folgenden detailliert beschrieben. Es zeigen
- Fig. 1: eine Stirnansicht auf die Innenseite des Leuchtengehäuses,
- Fig. 2: eine Stirnansicht gemäß Figur 1 mit geschwenkter Optik,
- Fig. 3 - Fig. 5: verschiedene, mit der Optik einstellbare Beleuchtungstypen,
- Fig. 6: ein seitlicher Detailschnitt der Aufhängung einer Optik in dem Leuchtengehäuse,
- Fig. 7: eine Stirnansicht - im Schnitt - eines an dem Leuchtengehäuse Befestigbarem Montageblechs und
- Fig. 8: eine Stirnansicht auf die Innenseite des Leuchtengehäuses gemäß Figur 1, in der die Optik in zwei Schwenkstellungen dargestellt ist.

Gemäß den Zeichnungen besteht die Leuchte aus einem kastenförmigen Leuchtengehäuse 1 aus einem Profilblech.

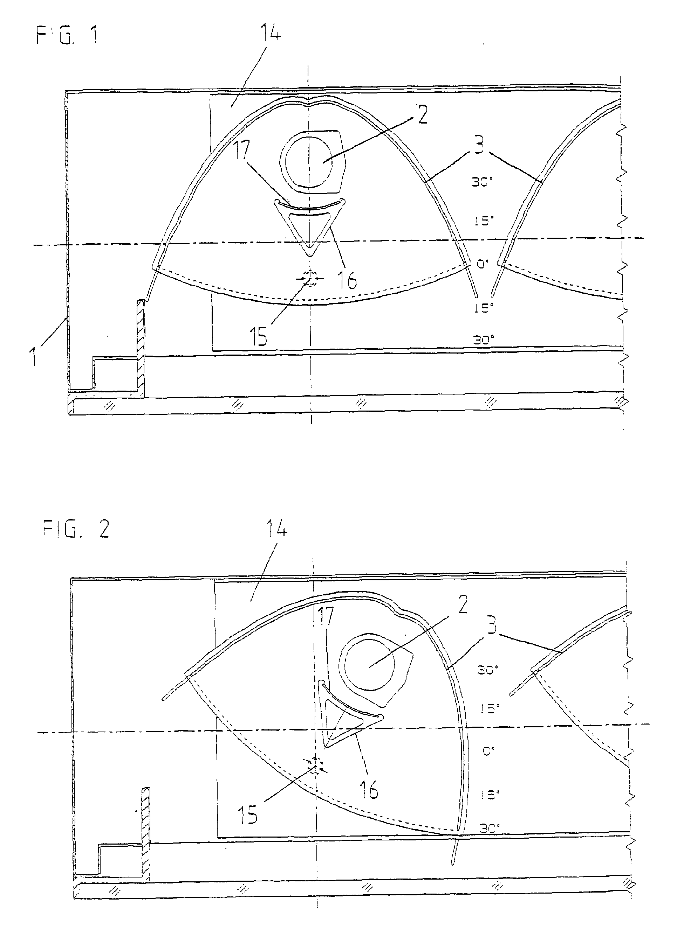

In Längserstreckungsrichtung, d.h. in Betrachtungsrichtung zu den Figuren 1 bis 5, sind in dem Leuchtengehäuse 1 sich längserstreckende Leuchtstofflampen 2 angeordnet. Von den Leuchtstofflampen 2 können eine oder mehrere nebeneinander liegend in dem Leuchtengehäuse 1 vorgesehen sein. Jede Leuchtstofflampe 2 ist auf ihrer - in den Figuren oberen - Seite von einem parabolförmigen Reflektor 3 umgeben, welcher die Strahlung der Leuchtstofflampe 2 in bekannter Weise bündelt, um durch eine gezielte Lenkung des Lichts die nutzbare Lichtmenge zu vergrößern.

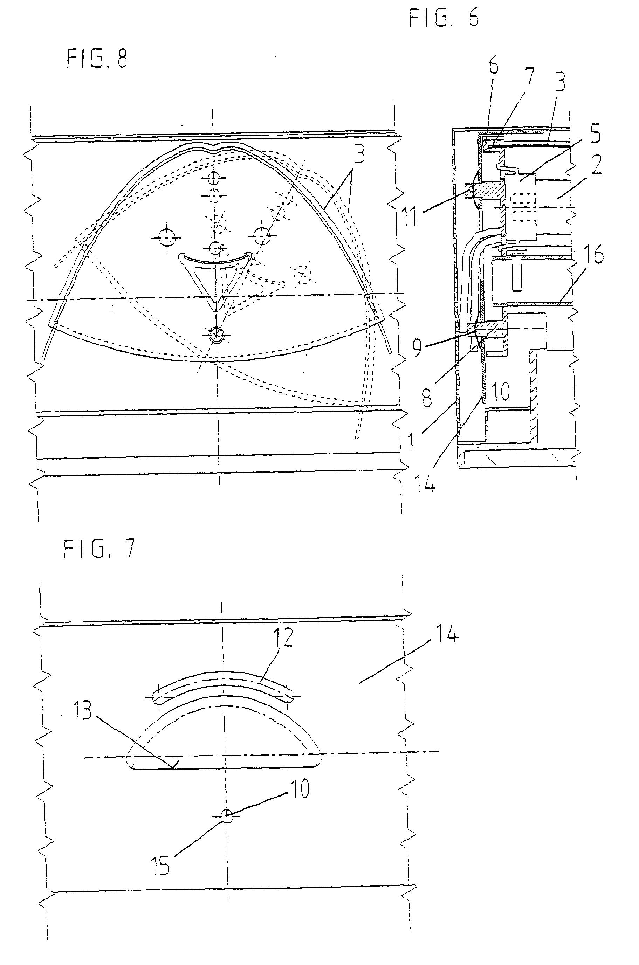

Wie insbesondere Figur 6 zu entnehmen ist, die eine Detailansicht des Kopfstücks im Längsschnitt darstellt, besteht jede Optik aus einem Reflektorblech 3, welches die Leuchtstofflampe 2 umgibt. Die Leuchtstofflampe 2 ist an ihren stirnseitigen Enden in bekannter Weise in Halterungen 5 eingesetzt, die auf ihrer der Leuchtstofflampe 2 gegenüberliegenden Seite jeweils über Rasthaken in ein Kopfstück 6 eingerastet sind. Die Kopfstücke 6 sind vorzugsweise als Aluminiumdruckgussprofile ausgebildet.

Das Kopfstück 6 ist mit einer nach innen versetzt vom Umfangsrand verlaufenden Nut 7 versehen, in welche das stirnseitige Ende des Reflektors 3 einrastbar ist. Ein Reflektor 3 ist zwischen zwei Kopfstücken eingeklemmt, die ihrerseits drehbar in dem Leuchtengehäuse 1 gelagert sind.

Jedes Kopfstück weist an der von der Leuchtstofflampe 2 abgewandten Außenseite an seinem unteren Ende ein Drehgelenk auf, das vorliegend als einstückig angeformter Stift 8 ausgebildet ist, der drehbar in das Leuchtengehäuse einsetzbar ist. Daneben kann ein Sicherungsblech 9 den Stift in dem Leuchtengehäuse sichern.

Die Optik ist um die Zentralachse des Stiftes 8 in dem Leuchtengehäuse schwenkbar. Vorzugsweise fluchten die Drehachsen der an sich gegenüberliegenden Kopfstücken gelegenen Stifte 8 zueinander.

In den Figuren 1 und 2 sind verschiedene Stellungen des Reflektors 3 dargestellt. In Figur 1 strahlt der Reflektor unmittelbar nach unten, um eine tiefstrahlende Beleuchtung zu erzeugen. In Figur 2 hat der Reflektor eine um 30 ° aus der in Figur 1 dargestellten Normalstellung versetzte Neigung. Mit dieser Stellung kann beispielsweise eine asymmetrische Beleuchtung in einem OP-Raum realisiert werden. In gleicher Weise können die Optiken der Leuchten um 30 ° in die entgegengesetzte Richtung geschwenkt werden. Je nach Anordnung der Leuchtengehäuse 1, die vorzugsweise als Einbauleuchten ausgebildet sind, im Raum können verschiedene Stellungswinkel der Optiken einfach von Hand eingestellt werden. Dazu ist grundsätzlich kein Werkzeug erforderlich.

Der Schwenkbereich ist eingrenzbar durch einen radial von der Rotationsachse des Drehgelenks beabstandeten Stift 11, der in Einbaulage in eine bogenförmigen Führungsnut 12 eingreift. Durch entsprechende Ausbildung der Länge der Führungsnut 12 ist der Maximalausschlag bzw. die maximale Schwenkbewegung der Optik begrenzbar.

In die Führungsnut 12 können ferner Begrenzungsstücke eingerastet werden, mit denen der Schwenkwinkel zusätzlich einschränkbar ist.

Die zum Betrieb der elektrischen Aggregate erforderlichen Leitungen sind durch eine Öffnung 13 in dem Kopfstück 6 führbar.

Die Figuren 6 und 7 stellen eine für herkömmliche Leuchtengehäuse nachrüstbare Ausführungsform der erfindungsgemäßen Optik dar. Zu diesem Zweck können innenseitig an dem bestehenden Leuchtengehäuse 1 in der Nähe der Stirnenden L-Profile 14 befestigt werden, die vorzugsweise als Blechteile ausgebildet sind und eine Bohrung 15 zur Lagerung der Drehachse sowie die bogenförmige Führungsnut 12 und die Öffnung 13 aufweisen. Auch kann durch Auswechseln der L-Profile 14 eine Führungsnut mit anderer Geometrie vorgesehen werden, um nachträglich einen anderen Schwenkwinkel zu erhalten. Die Leuchten sind also allein durch Auswechseln der als L-Profile ausgebildeten Haltebleche nach- und umrüstbar.

Selbstverständlich kann eine Bohrung für die Drehachse und eine Führungsnut auch unmittelbar an dem Leuchtengehäuse vorgesehen sein.

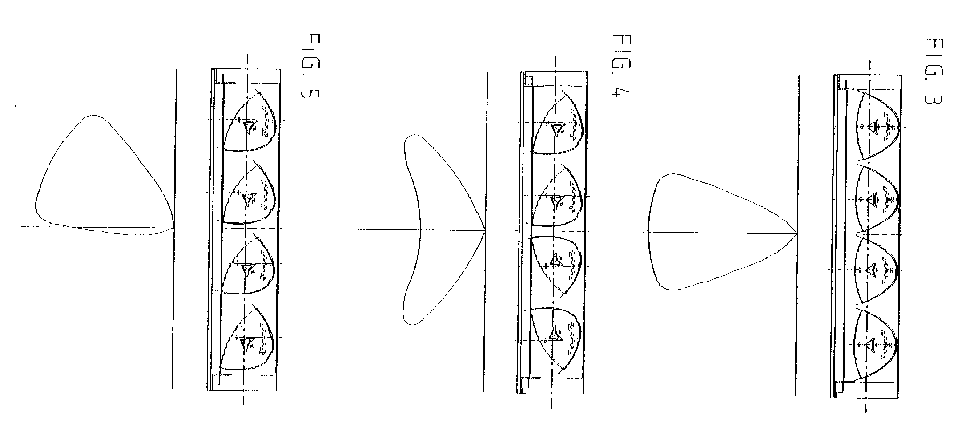

Wie in den Figuren 3 bis 5 dargestellt ist, lassen sich durch Ausrichtung der Optiken unterschiedliche Beleuchtungen erzielen. In der Figur 1 strahlen die Optiken unmittelbar nach unten zur Erzeugung einer symmetrisch tiefstrahlenden Beleuchtung.

Bei dem in der Figur 4 dargestellten Anwendungsfall sind jeweils zwei zu einer Seite von der vertikal verlaufenden Mittelachse der Leuchte gelegenen Optiken zur jeweiligen Außenseite des Leuchtengehäuses um 30 ° geschwenkt zur Erzeugung einer symmetrisch breitstrahlenden Beleuchtung.

Bei der in Figur 5 dargestellten Ausführungsform sind jeweils alle Optiken der Leuchte um 30 ° nach links gekippt, um eine asymmetrisch tiefstrahlende Beleuchtung zu erzeugen.

Durch einfaches manuelles Ausrichten der Optiken sind damit alle Leuchtsituationen bedarfsgerecht einstellbar. Die erfindungsgemäße Optik lässt sich sowohl in Anbau- als auch in Einbauleuchten realisieren. Sind mehrere Optiken in einer Leuchte vorgesehen, können diese unabhängig voneinander eingestellt werden.

Um die direkte Strahlung der Leuchtstofflampe 2 ebenfalls in gewünschter Richtung durch den Reflektor 3 zu lenken, ist in den Figuren unterhalb der Leuchtstofflampe eine Reflektorleiste 16 zwischen zwei sich gegenüberliegenden Kopfstücken 6 einer Optik eingeklemmt, die auf ihrer zur Leuchtstofflampe 2 zugewandten Oberfläche mit einem Spiegel 17 versehen ist, der vorzugsweise aus hochglänzendem Aluminium gefertigt ist und in Rastnasen der Reflektorleiste 16 einrastet. Dieser Spiegel 17 lenkt das direkte Licht in den Reflektor und erhöht die gerichtete Lichtdichte.

Die Reflektorleiste ist üblicherweise wie das Kopfstück aus stranggepresstem Aluminium gefertigt und vorzugsweise als Hohlprofil mit dreieckigem Querscnitt ausgebildet. In den vorliegenden Auführungsbeispielen besteht eine Optik demnach jeweils aus zwei stirnseitigen Kopfstücken 6, die zwischen sich eine langgestrechte Leuchtstofflampe 2 und einen Reflektor 3 aufnehmen.

### Optik für Raumleuchten

### Bezugszeichenliste

- 1: Leuchtengehäuse
- 2: Leuchtstofflampe
- 3: Reflektor
- 5: Halterung
- 6: Kopfstück
- 7: Nut
- 8: Stift
- 9: Sicherungsblech
- 10: Drehachse
- 11: Stift
- 12: Führungsnut
- 13: Öffnung
- 14: L-Profil
- 15: Bohrung
- 16: Reflektorleiste
- 17: Spiegel

## Patentansprüche

**1.** Optik zur Bündelung des von einer langgestreckten Leuchtstofflampe (2) ausgestrahlten Lichts, insbesondere für eine Reinstraumleuchte zur Verwendung im klinischen Bereich, die einen Reflektor (3) aufweist, der die Leuchtstofflampe (2) teilweise umschließt und das von der Leuchtstofflampe (2) emittierte Licht bündelt, **dadurch gekennzeichnet ,dass** zumindest der Reflektor (3) drehbar in einem Leuchtengehäuse (1) gelagert ist.

**2.** Optik nach Anspruch 1, **dadurch gekennzeichnet ,dass** der Reflektor (3) endseitig in drehbar in dem Leuchtengehäuse (1) gelagerten Kopfstücken (6) aufgenommen ist, die im Verhältnis zum Leuchtengehäuse (1) schwenkbar sind.

**3.** Optik nach einem der vorhergehenden Ansprüche, **dadurch gekennzeichnet ,dass** die Leuchtstofflampe (2) zwischen den Kopfstücken aufgenommen und mit diesen im Verhältnis zum Leuchtengehäuse (1) schwenkbar ist.

**4.** Optik nach einem der Ansprüche 1 bis 3, **dadurch gekennzeichnet, dass** die Winkelstellung stufenlos einstellbar ist.

**5.** Optik nach einem der vorhergehenden Ansprüche, die Mittel zur stufenweisen Einstellung des Strahlungswinkels aufweist.

**6.** Optik nach Anspruch 2 bis 5, **dadurch gekennzeichnet, dass** das die Kopfstücke (6) Drehgelenke aufweisen, die drehbar in dem Leuchtengehäuse (1) gelagert sind.

**7.** Optik nach einem der vorhergehenden Ansprüche, **gekennzeichnet dadurch, dass** Mittel zur Begrenzung der Drehung vorgesehen sind.

**9.** Optik nach Anspruch 7, **dadurch gekennzeichnet, dass** die Mittel ein radial von dem Drehgelenk beabstandetes Führungselement aufweisen, das in einer Führung in dem Leuchtengehäuse (1) geführt ist.

**10.** Optik nach einem der vorhergehenden Ansprüche, **gekennzeichnet durch** eine in Strahlungsrichtung vor der Leuchtstofflampe (2) angeordnete Reflektorleiste (16), die mit der Optik drehbar ist.

**11.** Optik nach einem der vorhergehenden Ansprüche, deren Strahlungsrichtung motorisch einstellbar ist.

**12.** Optik nach einem der vorhergehenden Ansprüche, **dadurch gekennzeichnet, dass** diese in Halteblechen gelagert ist, die an dem Leuchtengehäuse (1) befestigbar sind.
